(19) Europäisches Patentamt
European Patent Office
Office européen des brevets

(11) **EP 2 393 087 B1**

(12) **FASCICULE DE BREVET EUROPEEN**

(45) Date de publication et mention
de la délivrance du brevet:
**03.10.2012 Bulletin 2012/40**

(51) Int Cl.:
*G21C 17/06* *(2006.01)*     *G21C 17/10* *(2006.01)*
*G01N 23/09* *(2006.01)*     *G01T 1/00* *(2006.01)*

(21) Numéro de dépôt: **11168363.7**

(22) Date de dépôt: **01.06.2011**

(54) **Procédé de détermination d'intensité d'émission de rayonnement gamma d'un radioélément**

Verfahren zur Bestimmung der Intensität der Gammastrahlenemission eines radioaktiven Elements

Method for determining the emission intensity of gamma radiation from a radioelement

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **07.06.2010 FR 1054453**

(43) Date de publication de la demande:
**07.12.2011 Bulletin 2011/49**

(73) Titulaire: **Commissariat à l'Énergie Atomique
et aux Énergies Alternatives
75015 Paris (FR)**

(72) Inventeur: **Leconte, Pierre
13100 AIX EN PROVENCE (FR)**

(74) Mandataire: **Ilgart, Jean-Christophe
Brevalex
95, rue d'Amsterdam
F-75378 Paris Cedex 8 (FR)**

(56) Documents cités:
**FR-A- 1 506 677      FR-A5- 2 149 922
JP-A- 2005 321 252**

**Description**

Domaine technique et art antérieur

L'invention concerne un procédé de détermination d'intensité d'émission de rayonnement gamma ($\gamma$) d'un radioélément.

Les intensités d'émission de rayonnement gamma des radioéléments sont des données qu'il est important de connaître dans plusieurs domaines de la physique des réacteurs. Ce sont des données utilisées, par exemple, dans les mesures non destructives (spectrométrie gamma) ou en entrée des codes de simulation utilisés pour la détermination des échauffements photoniques.

Une première méthode de détermination de l'intensité des émissions gamma émises suite à une désintégration $\beta^-$ consiste à combiner des mesures d'intensité relative obtenues avec une excellente précision (autour de 1%) par spectrométrie à haute résolution, par exemple grâce à un détecteur au Germanium, à des données de rapport de branchement $\beta^-$, lesquelles sont, en revanche, moins bien maîtrisées. De ce fait, les données d'émission gamma obtenues par cette première méthode ont souvent une incertitude supérieure à 10%. Ceci présente un réel inconvénient.

Une méthode connue plus récente permet de s'affranchir de la détermination des rapports de branchement $\beta^-$. En mesurant le taux de désintégration par des systèmes de coïncidences $4\pi\beta$-$\gamma$ et les intensités d'émission par spectrométrie gamma, des améliorations importantes ont pu être faites, avec l'obtention d'incertitudes meilleures que 1% pour certains radionucléides. La précision obtenue sur la détermination des intensités d'émission gamma et, en particulier, sur la normalisation de ces données, est cependant fortement liée à la pureté radiologique du radionucléide étudié, laquelle conditionne également l'incertitude sur le taux de désintégration. Ainsi, compte tenu du temps nécessaire à la préparation des échantillons, cette méthode s'avère délicate à mettre en oeuvre pour des radionucléides ayant une courte durée de vie, c'est-à-dire de l'ordre de quelques minutes à quelques heures. Ceci présente également un réel inconvénient.

L'invention ne présente pas les inconvénients mentionnés ci-dessus.

Le document FR 1 506 677 A divulgue un procédé de détermination d'intensité de rayonnement gamma d'un radioélément comprenant une première étape d'irradiation d'un échantillon de ce radioélément et d'un échantillon d'un radioélément étalon, placés dans un réacteur nucléaire, et une seconde étape d'extraction de l'échantillon du radioélément et de l'échantillon de radioélément étalon du réacteur nucléaire.

Le document FR 2 149 922 A5 divulgue un procédé pour le contrôle des matières fissiles comprenant une étape de mesure de variations de réactivité à l'aide d'un technique d'oscillation dans un réacteur sous-critique.

Exposé de l'invention

En effet, l'invention concerne un procédé de mesure d'intensité de rayonnement gamma d'un radioélément, caractérisé en ce qu'il comprend :

- une étape d'irradiation d'un échantillon du radioélément et d'un échantillon de radioélément étalon placés dans un réacteur nucléaire,
- une étape d'extraction du réacteur nucléaire de l'échantillon du radioélément et de l'échantillon de radioélément étalon,
- une étape de détermination d'une donnée de surface nette $S(Ech_1)$ de rayonnement gamma de l'échantillon du radioélément par une première chaîne de mesure,
- une étape de détermination d'une donnée de surface nette $S(Ech_2)$ de rayonnement gamma de l'échantillon de radioélément étalon par une deuxième chaîne de mesure identique à la première chaîne de mesure ,
- une étape de mesure d'une première variation de réactivité $\Delta p_1$ du réacteur nucléaire, par la technique d'oscillation, entre une première position de l'échantillon du radioélément où l'échantillon du radioélément est hors du réacteur nucléaire réglé à une puissance donnée et une deuxième position de l'échantillon du radioélément où l'échantillon du radioélément est dans le réacteur nucléaire réglé à la même puissance donnée,
- une étape de mesure d'une deuxième variation de réactivité $\Delta\rho_2$ du réacteur nucléaire, par la technique d'oscillation, entre une première position de l'échantillon de radioélément étalon où l'échantillon de radioélément étalon est hors du réacteur nucléaire réglé à une puissance donnée et une deuxième position de l'échantillon de radioélément étalon où l'échantillon de radioélément étalon est dans le réacteur nucléaire réglé à ladite puissance donnée, et
- une étape de calcul de l'intensité gamma du radioélément à l'aide de l'équation .

$$I(Ech_1) = (\frac{S(Ech_1)}{S(Ech_2)} \frac{R_2}{R_1} \frac{C_{d2}}{C_{d1}} \frac{\Delta\rho_2}{\Delta\rho_1} \frac{W_{A,1}}{W_{A,2}}) I(Ech_2)$$

Où

R$_1$ et R$_2$ sont, respectivement, le rendement d'absorption totale d'un détecteur de la première chaîne de mesure à l'énergie de l'échantillon du radioélément et le rendement d'absorption totale d'un détecteur de la deuxième chaîne de mesure à l'énergie de l'échantillon du radioélément étalon,

W$_{A,1}$ et W$_{A,2}$ sont, respectivement, l'importance neutronique du radioélément et l'importance neutronique du radioélément étalon,

C$_{d1}$ et C$_{d2}$ sont, respectivement, une donnée de correction de décroissance radioactive de l'échantillon du radioélément et une donnée de correction de décroissance radioactive de l'échantillon de radioélément étalon, et

I (Ech$_2$) est l'intensité de rayonnement gamma du radioélément étalon.

Dans un mode de réalisation particulier de l'invention, l'étape de mesure d'une première variation de réactivité Δρ1 du réacteur nucléaire est effectuée par au moins une mesure de variation de position d'une barre de contrôle du réacteur nucléaire entre :

a) une première position de la barre de contrôle pour laquelle l'échantillon du radioélément est placé à l'extérieur du réacteur nucléaire réglé à une puissance donnée, et

b) une deuxième position de la barre de contrôle pour laquelle l'échantillon du radioélément est placé à l'intérieur du réacteur nucléaire et le réacteur nucléaire est réglé, du fait de la deuxième position de la barre de contrôle, à ladite puissance donnée.

De même, l'étape de mesure d'une deuxième variation de réactivité Δρ$_2$ du réacteur nucléaire est effectuée par au moins une mesure de variation de position d'une barre de contrôle du réacteur nucléaire entre :

a) une première position de la barre de contrôle pour laquelle l'échantillon de radioélément étalon est placé à l'extérieur du réacteur nucléaire réglé à une puissance donnée, et

b) une deuxième position de la barre de contrôle pour laquelle l'échantillon de radioélément étalon est placé à l'intérieur du réacteur nucléaire et le réacteur nucléaire est réglé, du fait de la deuxième position de la barre de contrôle, à ladite puissance donnée.

Selon une caractéristique supplémentaire de l'invention, le procédé comprend, en outre, au moins une étape de mesure d'une variation de réactivité Δρ$_e$ du réacteur nucléaire, par la technique d'oscillation, entre une première position d'un échantillon vide où l'échantillon vide est hors du réacteur nucléaire réglé à une puissance donnée et une deuxième position de l'échantillon vide où l'échantillon vide est placé dans le réacteur réglé à ladite puissance donnée, la mesure de réactivité Δρ$_e$ étant retranchée des mesures de réactivité respectives Δρ$_1$ et Aρ$_2$ de sorte qu'une intensité gamma corrigée I (Ech$_1$)$_c$ du radioélément est donnée par l'équation :

$$I(Ech_1)_C = (\frac{S(Ech_1)}{S(Ech_2)} \frac{R_2}{R_1} \frac{C_{d2}}{C_{d1}} \frac{\Delta\rho_2 - \Delta\rho_e}{\Delta\rho_1 - \Delta\rho_e} \frac{W_{A,1}}{W_{A,2}}) I(Ech_2)$$

Brève description des figures

D'autres caractéristiques et avantages de l'invention apparaîtront à la lecture d'un mode de réalisation préférentiel fait en référence aux figures jointes, parmi lesquelles :

- La figure 1 représente un schéma de principe du procédé de détermination d'intensité de rayonnement gamma de l'invention;
- La figure 2 représente un schéma de principe d'une suite d'étapes particulières du procédé de l'invention représenté en figure 1;

- La figure 3 représente une première configuration de dispositif qui participe à la mise en oeuvre du procédé de l'invention ;
- La figure 4 représente une deuxième configuration de dispositif qui participe à la mise en oeuvre du procédé de l'invention ;
- Les figures 5A et 5B représentent, respectivement, une troisième configuration et une quatrième configuration de dispositif qui participent à la mise en oeuvre de la suite d'étapes particulières représentées en figure 2.

Sur toutes les figures, les mêmes références désignent les mêmes éléments.

Exposé détaillé d'un mode de réalisation préférentiel de l'invention

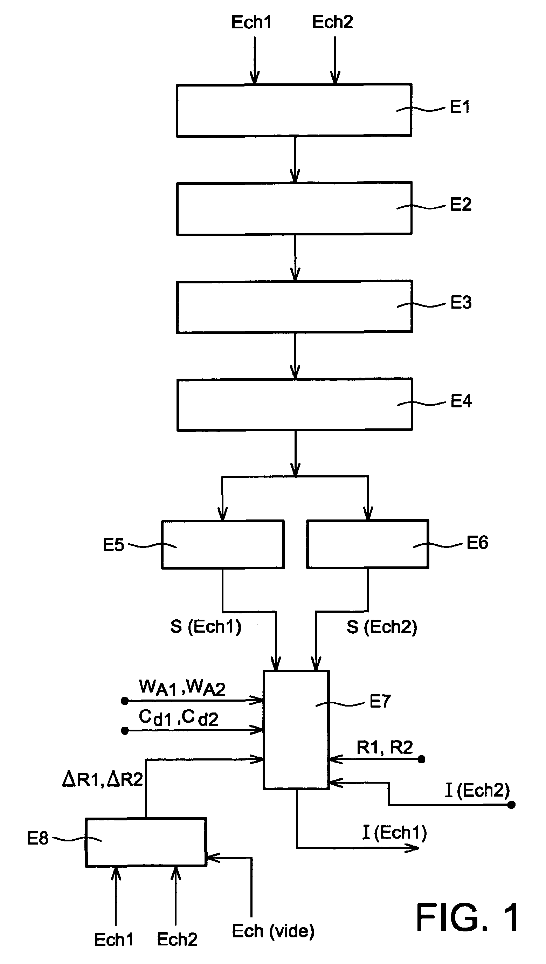

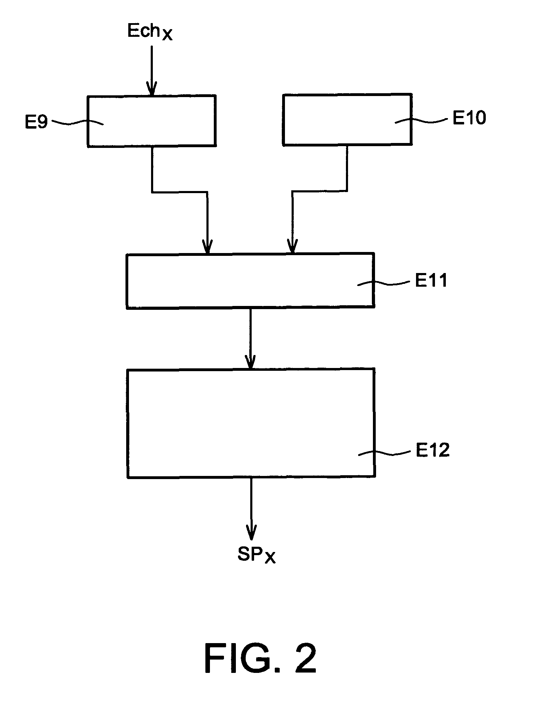

La figure 1 représente un schéma de principe du procédé de détermination d'intensité de rayonnement gamma de l'invention et la figure 2 représente un schéma de principe d'une suite d'étapes particulières du procédé de l'invention représenté en figure 1.

Le procédé de l'invention comprend (cf. figure 1) une étape $E_1$ de montage, dans une canne d'oscillation, de l'échantillon $Ech_1$ dont l'intensité d'émission gamma I ($Ech_1$) est à déterminer et d'un échantillon étalon $Ech_2$ dont l'intensité d'émission gamma I ($Ech_2$) est connue, une étape $E_2$ de montage de la canne d'oscillation équipée des échantillons $Ech_1$ et $Ech_2$ dans un réacteur nucléaire, une étape $E_3$ d'irradiation des échantillons $Ech_1$ et $Ech_2$ placés dans le réacteur nucléaire, une étape $E_4$ d'extraction des échantillons irradiés du réacteur nucléaire, une étape $E_5$ de mesure de surface nette de rayonnement gamma de l'échantillon irradié (mesure de la surface de la raie gamma) et de mise en forme de la mesure de surface nette pour obtenir un donnée de surface nette S($Ech_1$), une étape $E_6$ de mesure de surface nette de l' échantillon étalon irradié (mesure de la surface de la raie gamma) et de mise en forme de la mesure de surface nette obtenue pour former une donnée de surface nette S($Ech_2$), les mesures de surface nette de rayonnement gamma des échantillons irradiés respectifs $Ech_1$ et $Ech_2$ pouvant être réalisées à l'aide d'une même chaîne de mesure (les mesures sont alors effectuées successivement) ou de deux chaînes de mesure identiques l'une à l'autre (les mesures peuvent alors être effectuées simultanément), et une étape $E_7$ de calcul de l'intensité I ($Ech_1$) d'émission gamma de l'échantillon $Ech_1$ à partir :

- des données de surface nette S ($Ech_1$) et S ($Ech_2$),
- des rendements d'absorption totale R1 et R2 du détecteur de la chaîne de mesure aux énergies des rayonnements gamma des échantillons respectifs $Ech_1$ et $Ech_2$ (rendements d'absorption totale préalablement enregistrés, obtenus à l'aide de sources radioactives de référence ayant les mêmes énergies que les échantillons respectifs $Ech_1$ et $Ech_2$),
- de données d'importance neutronique d'absorption $W_{A,1}$ et $W_{A,2}$ relatives aux échantillons respectifs $Ech_1$ et $Ech_2$,
- d'une première variation de réactivité $\Delta\rho_1$ du réacteur nucléaire entre une première position où l'échantillon du radioélément est hors d'un réacteur nucléaire réglé à une puissance donnée et une deuxième position où l'échantillon du radioélément est dans le réacteur nucléaire réglé à ladite puissance donnée,
- d'une deuxième variation de réactivité $\Delta\rho_2$ du réacteur nucléaire entre une première position où l'échantillon de radioélément étalon est hors du réacteur nucléaire réglé à une puissance donnée et une deuxième position où l'échantillon de radioélément étalon est dans le réacteur nucléaire réglé à ladite puissance donnée,
- de données de correction de décroissance radioactive $C_{d1}$ et $C_{d2}$ relatives aux échantillons respectifs $Ech_1$ et $Ech_2$, et
- de l'intensité d'émission gamma connue I ($Ech_2$) du radioélément étalon.

Il vient :

$$I(Ech_1) = (\frac{S(Ech_1)}{S(Ech_2)} \frac{R_2}{R_1} \frac{C_{d2}}{C_{d1}} \frac{\Delta\rho_2}{\Delta\rho_1} \frac{W_{A,1}}{W_{A,2}}) I(Ech_2) \quad (1)$$

L'obtention des données $W_{A,1}$, $W_{A,2}$, $C_{d1}$, $C_{d2}$, $\Delta\rho_1$ et $\Delta\rho_2$ va maintenant être précisée.

La donnée d'importance neutronique d'absorption $W_{A,X}$ d'un échantillon radioactif X est, de façon connue en soi, la fonction importance, définie comme la valeur moyenne du flux adjoint $\Phi^*$, pondéré par le taux de capture. Il vient :

$$W_{A,X} = \frac{\int\limits_{Volume\ \acute{e}chantillonX} \Sigma(E)\phi(E,\vec{r})\phi*(E,\vec{r})dEd\vec{r}}{\int\limits_{Volume\ \acute{e}chantillonX} \Sigma(E)\phi(E,\vec{r})dEd\vec{r}} \quad (2)$$

où, par définition, la quantité $\int\limits_{volume\acute{e}chantillonX} \Sigma(E)\phi(E,\vec{r})dEd\vec{r}$ représente le taux de capture *volumeéchantillonX* de l'échantillon X et $\Phi*$ est le flux adjoint, la grandeur E étant l'énergie des neutrons. On rappelle également que le flux adjoint est la solution de l'équation adjointe de Boltzmann qui décrit le transport des neutrons dans un réacteur nucléaire.

Dans un spectre de neutrons thermiques obtenu en plaçant un matériau modérateur ou ralentisseur des neutrons autour de l'échantillon, il est connu de l'homme de l'art que la fonction importance d'absorption $W_{A,X}$ est pratiquement indépendante de l'isotope contenu dans l'échantillon X.

De façon connue en soi, la donnée de correction de décroissance radioactive $C_{dx}$ d'un échantillon X est donnée par la formule :

$$C_d = \frac{\left(1-e^{-\lambda t_i}\right)e^{-\lambda t_o}\left(1-e^{-\lambda t_m}\right)}{\lambda} \quad (3),$$

avec :

→ $\lambda$ la constante radioactive,
→ $t_i$ la durée d'irradiation de l'échantillon,
→ $t_0$ le temps de décroissance radioactive entre la fin de l'irradiation et le début de la mesure,
→ $t_m$ la durée de la mesure du rayonnement gamma.

Les données de variation du rendement d'absorption sont déduites de mesures de réactivité effectuées par la technique d'oscillation. Plusieurs types de mesures qui utilisent la technique d'oscillation peuvent être mis en oeuvre dans le cadre de l'invention. Il peut s'agir, par exemple,:

-    de mesures « cinétiques » où la variation de réactivité est déduite des variations de flux de neutrons observées entre l'état (1) où l'échantillon est hors du réacteur et l'état (2) où l'échantillon est dans le réacteur, sans stabilisation de la puissance par un moyen de contrôle ;
-    de mesures « statiques » où la variation de réactivité est déduite de la position d'une barre de contrôle qui permet de maintenir la puissance constante entre l'état (1) et l'état (2).

La figure 2 illustre le mode de réalisation préférentiel de l'invention dans lequel la mesure de variation de réactivité $\Delta\rho_X$ du réacteur associé à un radioélément X est déduite de la variation de position $\delta P_X$ d'une barre de contrôle du réacteur nucléaire.

Le procédé d'obtention de la donnée de variation de position $\delta P_X$ comprend une étape E9 de montage d'un échantillon $Ech_X$ dans une canne d'oscillation, une étape E10 de mise en fonctionnement d'un réacteur nucléaire à l'état critique (i.e. mise en fonctionnement du réacteur nucléaire de sorte que celui-ci délivre une puissance stable donnée), une étape E11 de mise en oscillation de la canne équipée de l'échantillon $Ech_X$ dans le réacteur nucléaire à l'état critique (i.e. d'une succession d'introduction/extraction de la canne dans le réacteur), durant laquelle sont effectuées des mesures de position de la barre de contrôle et une étape E12 de calcul de la variation de position $\delta P_X$ à partir des mesures de position de la barre de contrôle.

Le réacteur nucléaire est équipé, de façon connue en soi, d'une barre de contrôle susceptible de se déplacer pour ajuster la puissance qu'il délivre. Dès lors que l'état critique du réacteur est obtenu, la position de la barre de contrôle qui est associée à cet état critique est mesurée. Durant la mise en oscillation de la canne, à chaque fois que la canne est présente dans le réacteur, une instabilité du réacteur se produit conduisant à une modification de la puissance délivrée par le réacteur. Un asservissement de la position de la barre de contrôle est alors mis en oeuvre pour annuler l'instabilité qui apparaît dans le réacteur (retour à la valeur de puissance initiale). La position de la barre de contrôle qui annule l'instabilité est alors mesurée. La variation de position de la barre de contrôle est alors calculée. Un rapport existe, qui est calculé, entre la variation de la barre de contrôle et la variation de réactivité.

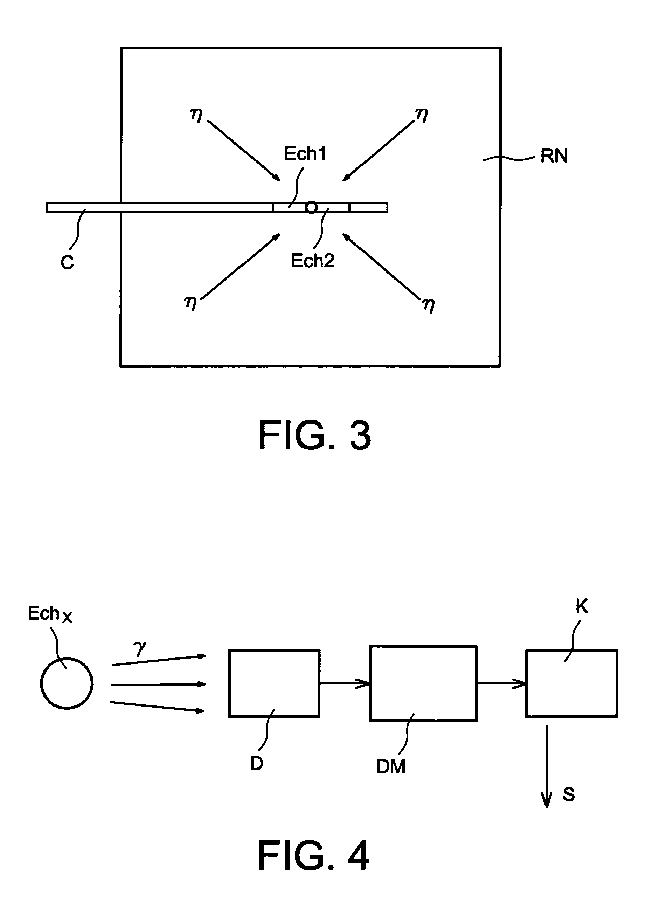

La figure 3 représente une première configuration de dispositif qui participe à la mise en oeuvre du procédé de l'invention. Le dispositif représenté en figure 3 met en oeuvre l'étape E3 d'irradiation des échantillons Ech$_1$ et Ech$_2$. Les échantillons Ech$_1$ et Ech$_2$ placés dans un réacteur nucléaire RN sont montés dans une canne d'oscillation C et bombardés de neutrons n. La canne d'oscillation est ici utilisée comme simple support des échantillons et n'est soumise à aucun mouvement d'oscillation.

Les échantillons Ech$_1$ et Ech$_2$ sont placés dans deux positions symétriques du cour du réacteur afin d'être irradiés dans le même flux neutronique. De façon pratique, les échantillons Ech$_1$ et Ech$_2$ sont placés entre des rondins d'aluminium (non représentés sur la figure) qui assurent entre eux une distance de séparation, par exemple d'au moins 10cm, afin qu'ils ne se perturbent pas mutuellement. La canne d'oscillation est accrochée à un système mécanique de translation qui vient positionner les deux échantillons symétriquement par rapport au plan médian du réacteur nucléaire, dans le canal central, assurant ainsi une thermalisation importante des neutrons. Une fois les échantillons positionnés dans le réacteur, l'opérateur commande la divergence du réacteur au moyen d'un dispositif de contrôle. Le dispositif de contrôle est, par exemple, constitué de quatre barres de commande en Hafnium, matériau très absorbant aux neutrons, que l'on extrait progressivement du réacteur au moyen d'un dispositif de translation verticale. Le réacteur est stabilisé à une puissance donnée, de l'ordre de quelques dizaines Watts (typiquement entre 20 et 80W). Le réacteur est maintenu à l'état critique pendant le temps nécessaire à l'activation neutronique des matériaux constitutifs des deux échantillons. Une fois le temps d'irradiation atteint, le réacteur est mis à l'arrêt au moyen d'un dispositif de commande.

La figure 4 représente une deuxième configuration de dispositif qui participe à la mise en oeuvre du procédé de l'invention. Le dispositif représenté en figure 4 met en oeuvre l'étape E5 de mesure des surfaces nettes. Le dispositif comprend un détecteur de rayonnement gamma D, un dispositif électronique de mesure DM et un calculateur K. Le détecteur D est, par exemple, un détecteur de type Germanium Hyper-Pur. Le dispositif électronique de mesure DM assure la collecte et le stockage des signaux délivrés par le détecteur D. Le calculateur K traite les signaux délivrés par le dispositif électronique de mesure DM et, via un logiciel spécifique connu en soi, délivre une donnée de surface nette S pour chaque raie de rayonnement gamma étudiée.

Chaque échantillon Ech$_x$ (X = 1, 2) est mesuré individuellement sur la chaîne de mesure constituée des éléments D, DM et K, pendant une durée de quelques minutes à quelques heures. L'incertitude généralement atteinte sur la mesure d'activité du radionucléide créé par activation est de 0,5%, voire moins. Pour cela, on enregistre, par exemple, au moins quarante mille coups dans la surface nette du pic en prolongeant la durée de mesure aussi longtemps que nécessaire. Généralement, on reproduit l'expérience, par exemple au moins trois fois, pour vérifier la cohérence des résultats.

Dans le mode de réalisation de l'invention décrit ci-dessus, les deux échantillons Ech$_1$ et Ech$_2$ sont irradiés simultanément dans des positions symétriques par rapport au volume intérieur du réacteur afin que les échantillons voient le même flux neutronique. Selon un autre mode de réalisation de l'invention, l'irradiation de chaque échantillon est faite séparément, les échantillons étant successivement placés dans le plan médian du réacteur.

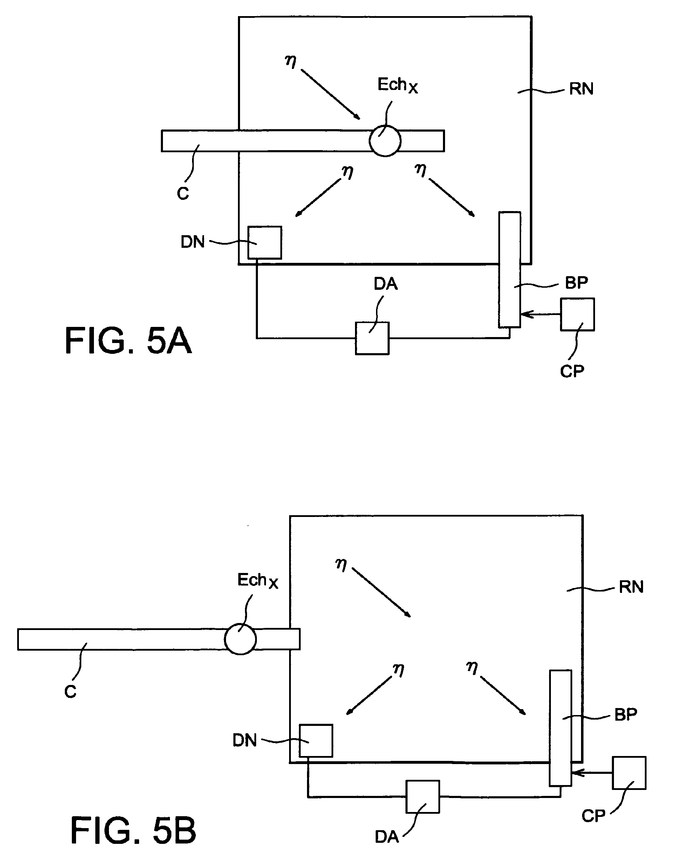

Les figures 5A et 5B représentent, respectivement, une troisième configuration et une quatrième configuration de dispositif qui participent à la mise en oeuvre de la suite d'étapes particulières représentées en figure 2.

Plus particulièrement, les figures 5A et 5B représentent les deux positions extrêmes de la canne d'oscillation lors de l'étape E11 mentionnée précédemment. La figure 5A représente la canne d'oscillation à l'intérieur du réacteur nucléaire et la figure 5B représente la canne d'oscillation à l'extérieur du réacteur. Dans les deux cas, le dispositif comprend le réacteur nucléaire RN, la canne d'oscillation C équipée d'un échantillon Ech$_x$ (X=1, 2), un détecteur de neutrons DN, par exemple une chambre à dépôt de bore, une barre de contrôle mobile BP, un dispositif d'asservissement DA et un capteur CP de mesure de position apte à mesurer la position de la barre de contrôle BP. La barre de contrôle BP est constituée d'un matériau absorbant les neutrons et son insertion plus ou moins importante dans le réacteur RN produit une variation de la densité neutronique.

La canne d'oscillation C qui contient l'échantillon Ech$_x$ est mû au moyen d'un système mécanique (non représenté sur les figures) entre la position extérieure au réacteur nucléaire RN (cf. figure 5B) et la position intérieure au réacteur nucléaire (cf. figure 5A).

Avant que l'échantillon ne soit introduit dans le réacteur nucléaire, un opérateur commande la divergence de celui-ci au moyen d'un système de contrôle connu en soi (non représenté sur la figure). Une fois le réacteur à l'état critique, le dispositif d'asservissement DA commande la barre de contrôle BP pour ajuster finement la criticité (obtention d'une valeur stable de la puissance émise). Le capteur de position CP mesure alors la position de la barre de contrôle BP, l'échantillon étant toujours situé à l'extérieur du réacteur nucléaire. L'échantillon est alors introduit dans le réacteur nucléaire RN. Il est supposé que, lors du séjour de l'échantillon dans le réacteur, l'isotope ZX n'interagit que par capture radiative. On peut alors montrer qu'entre la position de l'échantillon à l'extérieur du réacteur nucléaire et la position de l'échantillon à l'intérieur du réacteur nucléaire, la densité de neutron n(r) en un point r du volume du réacteur subit une variation qui peut être considérée comme la somme de deux effets .

- une perturbation globale, reliée à la variation de la composante de capture 5E par une fonction de transfert H indépendante de la position, et
- une perturbation locale, proportionnelle à la variation de la section de capture $\delta\Sigma$ par une fonction a(r) diminuant rapidement en fonction de la distance à la zone perturbée.

La relation fondamentale qui traduit ces deux effets et sur laquelle s'appuie la méthode de mesure de l'invention est la suivante :

$$\frac{\delta n(r)}{n} = H\delta k + a(r)\delta(\Sigma) \quad (4)$$

où $\delta n(r)/n$ est la variation relative de densité de neutrons au point r et $\delta k$ est, par définition, la variation du facteur de multiplication effectif k du réacteur entre les deux positions « échantillon à l'intérieur du réacteur » et « échantillon à l'extérieur du réacteur ».

Le détecteur de neutrons DN est placé suffisamment loin de l'échantillon pour permettre une mesure précise de la variation de densité neutronique qui est induite du fait de l'introduction de l'échantillon dans le réacteur nucléaire. L'information relative à la variation de densité neutronique qui est détectée par le détecteur DN est alors transmise, par l'intermédiaire du dispositif d'asservissement DA, à la barre de contrôle BP. Sous l'effet du signal délivré par le détecteur DN, le dispositif d'asservissement DA compense alors la perturbation induite par la présence de l'échantillon dans le réacteur. Cette compensation conduit à replacer la criticité du réacteur dans son état initial, c'est-à-dire l'état qui était le sien avant introduction de l'échantillon (retour à la valeur du flux de neutrons constant). Le capteur CP de mesure de position de la barre de contrôle BP mesure alors la position occupée par la barre BP dans l'état critique retrouvé. La variation de position $\delta P$ de la barre de contrôle est calculée. Il est alors possible de créer un rapport X linéaire ou non, entre la variation de position $\delta P$ et la variation de réactivité $\delta k/k$, précédemment notée $\Delta\rho p$, qu'induit cette variation. Il vient :

$$\delta P = \chi\Delta\rho \quad (5)$$

En appliquant la théorie des perturbations exactes pour exprimer la variation de réactivité $\Delta\rho$, la variation de position $\delta P$ est alors reliée au taux de capture $T_c$ sur l'isotope $_Z^A X$ constitutif de l'échantillon, en faisant intervenir la fonction d'importance neutronique d'absorption $W_A$, soit :

$$\delta P = \alpha \, W_A T_C \quad (6)$$

où $\alpha$ est une constante de proportionnalité qui ne dépend pas de l'isotope $_Z^A X$ choisi, sous réserve que la variation de réactivité $\delta k/k$ soit de l'ordre de 10 dix pour cent mille ($10^{-4}$). Cette condition sur la variation de réactivité implique que l'échantillon soit de petite taille, par exemple $10 cm^3$, et qu'il contienne une quantité de matière de l'ordre de quelques milligrammes à quelques grammes.

$W_A$ est la fonction importance, définie comme cela a été mentionnée précédemment, à savoir :

$$W_A = \frac{\displaystyle\int_{Volume\ échantillon} \Sigma(E)\phi(E,\vec{r})\phi^*(E,\vec{r})dEd\vec{r}}{\displaystyle\int_{Volume\ échantillon} \Sigma(E)\phi(E,\vec{r})dEd\vec{r}}$$

Dans un spectre de neutrons thermiques, obtenu en plaçant un matériau modérateur (ralentisseur) des neutrons autour de l'échantillon, on démontre que ce terme $W_A$ est pratiquement indépendant de l'isotope contenu dans l'échantillon.

L'échantillon est ensuite sorti du réacteur RN et le dispositif d'asservissement place à nouveau le réacteur RN dans l'état critique initial.

Pour réduire les incertitudes de mesure, on répète successivement, par exemple, cinq à dix cycles d'oscillation (un cycle d'oscillation se composant de l'insertion et de l'extraction de l'échantillon dans le réacteur nucléaire) avec des paliers correspondant aux deux états « hors réacteur » et « dans le réacteur » de l'ordre d'une minute, mesures que l'on reproduit, par exemple, au moins cinq fois au cours d'un programme expérimental afin de tester l'influence du chargement/déchargement de l'échantillon dans la canne d'oscillation.

De façon préférentielle, ces différentes mesures de positions sont réalisées, successivement et dans les mêmes conditions, non seulement pour l'échantillon étudié ($Ech_1$) et pour l'échantillon étalon ($Ech_2$), mais également pour un échantillon vide dépourvu de radioélément, de même géométrie que les échantillons étudié et étalon (même gainage, même dimensions mais ne contenant aucun isotope). Les mesures de variation de réactivité obtenues pour l'échantillon vide sont alors retranchées des mesures obtenues pour l'échantillon étudié et pour l'échantillon étalon. Il est alors avantageusement possible de corriger les erreurs expérimentales dues à la structure qui contient les isotopes. L'intensité corrigée s'écrit alors :

$$I(Ech_1)_C = (\frac{S(Ech_1)}{S(Ech_2)} \frac{R_2}{R_1} \frac{C_{d2}}{C_{d1}} \frac{\Delta\rho_2 - \Delta\rho_e}{\Delta\rho_1 - \Delta\rho_e} \frac{W_{A,1}}{W_{A,2}}) I(Ech_2)$$

## Revendications

1. Procédé de détermination d'intensité de rayonnement gamma d'un radioélément, comprenant :

   - une étape (E3) d'irradiation d'un échantillon du radioélément et d'un échantillon de radioélément étalon placés dans un réacteur nucléaire,
   - une étape (E4) d'extraction de l'échantillon du radioélément et de l'échantillon de radioélément étalon du réacteur nucléaire,
   - une étape (E5) de détermination d'une donnée de surface nette S ($E_{ch1}$) d'un pic de rayonnement gamma de l'échantillon du radioélément par une première chaîne de mesure,
   - une étape (E6) de détermination d'une donnée de surface nette S($Ech_2$) d'un pic de rayonnement gamma de l'échantillon de radioélément étalon par une deuxième chaîne de mesure identique à la première chaîne de mesure,
   - une étape de mesure (E8) d'une première variation de réactivité $\Delta\rho_1$ du réacteur nucléaire par la technique d'oscillation entre une première position de l'échantillon du radioélément où l'échantillon du radioélément est hors du réacteur nucléaire réglé à une puissance donnée et une deuxième position de l'échantillon du radioélément où l'échantillon du radioélément est dans le réacteur nucléaire réglé à ladite puissance donnée,
   - une étape de mesure (E8) d'une deuxième variation de réactivité $\Delta\rho_2$ du réacteur nucléaire par la technique d'oscillation entre une première position de l'échantillon de radioélément étalon où l'échantillon de radioélément étalon est hors du réacteur nucléaire réglé à une puissance donnée et une deuxième position de l'échantillon de radioélément étalon où l'échantillon de radioélément étalon est dans le réacteur nucléaire réglé à ladite puissance donnée,
   - une étape de calcul (E7) de l'intensité gamma du radioélément à l'aide de l'équation :

$$I(Ech_1) = (\frac{S(Ech_1)}{S(Ech_2)} \frac{R_2}{R_1} \frac{C_{d2}}{C_{d1}} \frac{\Delta\rho_2}{\Delta\rho_1} \frac{W_{A,1}}{W_{A,2}}) I(Ech_2)$$

où
$R_1$ et $R_2$ sont, respectivement, le rendement d'absorption totale du détecteur de la première chaîne de mesure à l'énergie de l'échantillon du radioélément et le rendement d'absorption totale du détecteur de la deuxième chaîne de mesure à l'énergie de l'échantillon de radioélément étalon, $W_{A,1}$ et $W_{A,2}$ sont, respectivement, l'importance neutronique du radioélément et l'importance neutronique du radioélément étalon,
$C_{d1}$ et $C_{d2}$ sont, respectivement, une donnée de correction de décroissance radioactive de l'échantillon du radioélément et une donnée de correction de décroissance radioactive de l'échantillon de radioélément étalon, et $1(Ech_2)$ est l'intensité de rayonnement gamma du radioélément étalon.

**2.** Procédé selon la revendication 1, dans lequel l'étape de mesure (E8) d'une première variation de réactivité $\Delta\rho_1$ du réacteur nucléaire est effectuée par au moins une mesure de variation de position d'une barre de contrôle (BP) du réacteur nucléaire entre :

a) une première position de la barre de contrôle pour laquelle l'échantillon du radioélément est placé à l'extérieur du réacteur nucléaire et le réacteur nucléaire est réglé à une puissance donnée, et
b) une deuxième position de la barre de contrôle pour laquelle l'échantillon du radioélément est placé à l'intérieur du réacteur nucléaire et le réacteur nucléaire est réglé, du fait de la deuxième position de la barre de contrôle, à ladite puissance donnée, et

l'étape de mesure d'une deuxième variation de réactivité $\Delta\rho_2$ du réacteur nucléaire est effectuée par au moins une mesure de variation de position de la barre de contrôle du réacteur nucléaire entre :

a) une première position de la barre de contrôle pour laquelle l'échantillon de radioélément étalon est placé à l'extérieur du réacteur nucléaire et le réacteur nucléaire est réglé à une puissance donnée, et
b) une deuxième position de la barre de contrôle pour laquelle l'échantillon de radioélément étalon est placé à l'intérieur du réacteur nucléaire et le réacteur nucléaire est réglé, du fait de la deuxième position de la barre de contrôle, à ladite puissance donnée.

**3.** Procédé selon la revendication 1 ou 2 qui comprend, en outre, au moins une étape de mesure d'une variation de réactivité $\Delta\rho_e$ du réacteur nucléaire par la méthode d'oscillation entre une première position d'un échantillon vide où l'échantillon vide est hors du réacteur nucléaire réglé à une puissance donnée et une deuxième position de l'échantillon vide où l'échantillon vide est dans le réacteur nucléaire réglé à ladite puissance donnée, la mesure de réactivité $\Delta\rho_e$ étant retranchée des mesures de réactivité respectives $\Delta\rho_1$ et $\Delta\rho_2$ de sorte qu'une intensité gamma corrigée $I(Ech_1)_c$ du radioélément est donnée par l'équation :

$$I(Ech_1)_C = (\frac{S(Ech_1)}{S(Ech_2)} \frac{R_2}{R_1} \frac{C_{d2}}{C_{d1}} \frac{\Delta\rho_2 - \Delta\rho_e}{\Delta\rho_1 - \Delta\rho_e} \frac{W_{A,1}}{W_{A,2}}) I(Ech_2)$$

**4.** Procédé selon l'une quelconque des revendications 1 à 3, dans lequel les rendements d'absorption totale R1 et R2 sont préalablement mesurés à l'aide de sources radioactives de référence.

**5.** Procédé selon l'une quelconque des revendications précédentes, dans lequel la deuxième chaîne de mesure et la première chaîne de mesure sont une seule et même chaîne de mesure et en ce que l'étape de détermination de la donnée de surface nette $S(Ech_1)$ est réalisée simultanément à l'étape de détermination de la donnée de surface nette $S(Ech_2)$.

**Claims**

**1.** A method for determining the intensity of gamma radiation of a radioelement, the method comprising:

- a step (E3) for irradiating a sample of the radioelement and a sample of standard radioelement located in a nuclear reactor,
- a step (E4) for removing the sample of radioelement and the sample of standard radioelement from the nuclear reactor,
- a step (E5) for determining a net area $S (Ech_1)$ datum of gamma radiation of the sample of the radioelement by a first measuring channel,
- a step (E6) for determining a net area $S(Ech_2)$ datum of gamma radiation of the sample of standard radioelement by a second measuring channel identical to the first measuring channel,
- a step for measuring (E8) a first reactivity variation $\Delta\rho_1$ of the nuclear reactor by the technique of oscillation between a first position of the sample of the radioelement where the sample of the radioelement is out of the nuclear reactor set to a given power and a second position of the sample of the radioelement where the sample of the radioelement is in the nuclear reactor set to said given power,

- a step for measuring (E8) a second reactivity variation $\Delta\rho_2$ of the nuclear reactor by the technique of oscillation between a first position of the sample of standard radioelement where the sample of standard radioelement is out of the nuclear reactor set to a given power and a second position of the sample of standard radioelement where the sample of standard radioelement is in the nuclear reactor set to the given power,

- a step for calculating (E7) the gamma intensity of the radioelement using the equation:

$$I(Ech_1) = (\frac{S(Ech_1)}{S(Ech_2)}\frac{R_2}{R_1}\frac{C_{d2}}{C_{d1}}\frac{\Delta\rho_2}{\Delta\rho_1}\frac{W_{A,1}}{W_{A,2}})I(Ech_2)$$

where

$R_1$ and $R_2$ are respectively the total absorption efficiency of the detector of the first measuring channel at the energy of the sample of the radioelement and the total absorption efficiency of the detector of the second measuring channel at the energy of the sample of standard radioelement, $W_{A,1}$ and $W_{A,2}$ are respectively, the neutron importance of the radioelement and the neutron importance of the standard radioelement,

$C_{d1}$ and $C_{d2}$ are respectively a radioactive decay correction datum of the sample of the radioelement and a radioactive decay correction datum of the sample of standard radioelement, and

$I(Ech_2)$ is the gamma radiation intensity of the standard radioelement.

2. The method according to claim 1, wherein the step for measuring (E8) a first reactivity variation $\Delta\rho_1$ of the nuclear reactor is carried out by at least one position variation measurement of a control rod (BP) of the nuclear reactor between:

    a) a first position of the control rod for which the sample of the radioelement is located outside the nuclear reactor and the nuclear reactor is set to a given power, sand

    b) a second position of the control rod for which the sample of the radioelement is located inside the nuclear reactor and the nuclear reactor is set, due to the second position of the control rod, to said given power, and

the step for measuring a second reactivity variation $\Delta\rho_2$ of the nuclear reactor is carried out by at least one position variation measurement of the control rod of the nuclear reactor between:

    a) a first position of the control rod for which the sample of standard radioelement is located outside the nuclear reactor and the nuclear reactor is set to a given power, and

    b) a second position of the control rod for which the sample of standard radioelement is located inside the nuclear reactor and the nuclear reactor is set, due to the second position of the control rod, to said given power.

3. The method according to claim 1 or 2 which further includes at least one step for measuring a reactivity variation $\Delta\rho_e$ of the nuclear reactor by the method of oscillation between a first position of an empty sample where the empty sample is out of the nuclear reactor set to a given power and a second position of the empty sample where the empty sample is in the nuclear reactor set to said given power, the reactivity measurement $\Delta\rho_e$ being subtracted from the respective reactivity measurements $\Delta\rho_1$ and $\Delta\rho_2$ so that a corrected gamma intensity $I(Ech_1)c$ of the radioelement is given by the equation:

$$I(Ech_1)_C = (\frac{S(Ech_1)}{S(Ech_2)}\frac{R_2}{R_1}\frac{C_{d2}}{C_{d1}}\frac{\Delta\rho_2 - \Delta\rho_e}{\Delta\rho_1 - \Delta\rho_e}\frac{W_{A,1}}{W_{A,2}})I(Ech_2)\ .$$

4. The method according to any of claims 1 to 3, wherein the total absorption efficiencies R1 and R2 are measured beforehand using reference radioactive source.

5. The method according to any of the preceding claims, wherein the second measuring channel and the first measuring channel are one and single measuring channel and in that the step for determining the net area $S(Ech_1)$ datum is carried out simultaneously with the step for determining the net area $S(Ech_2)$ datum.

**Patentansprüche**

1. Verfahren zur Bestimmung der Intensität der Gammastrahlung eines radioaktiven Elements, umfassend:

   - einen Schritt (E3) der Bestrahlung einer Probe des radioaktiven Elements und einer Probe eines Standards des radioaktiven Elements, die sich in einem Kernreaktor befinden,
   - einen Schritt (E4) der Entfernung der Probe des radioaktiven Elements und der Probe des Standards des radioaktiven Elements aus dem Kernreaktor,
   - einen Schritt (E5) der Bestimmung eines Werts der Nettofläche $S(Ech_1)$ von einem Peaks der Gammastrahlung der Probe des radioaktiven Elements mittels einer ersten Messkette,
   - einen Schritt (E6) der Bestimmung eines Werts der Nettofläche $S(Ech_2)$ von einem Peaks der Gammastrahlung des Standards des radioaktiven Elements mittels einer zweiten Messkette, die identisch zu der ersten Messkette ist,
   - einen Schritt der Messung (E8) einer ersten Änderung der Reaktivität $\Delta\rho_1$ des Kernreaktors mittels der Oszillationstechnik zwischen einer ersten Position der Probe des radioaktiven Elements, wobei sich die Probe des radioaktiven Elements außerhalb des Kernreaktors, der auf eine vorgegebene Stärke eingestellt ist, befindet, und einer zweiten Position der Probe des radioaktiven Elements, wobei sich die Probe des radioaktiven Elements innerhalb des Kernreaktors, der auf die vorgegebene Stärke eingestellt ist, befindet,
   - einen Schritt der Messung (E8) einer zweiten Änderung der Reaktivität $\Delta\rho_2$ des Kernreaktors mittels der Oszillationstechnik zwischen einer ersten Position der Probe des Standards des radioaktiven Elements, wobei sich die Probe des Standards des radioaktiven Elements außerhalb des Kernreaktors, der auf eine vorgegebene Stärke eingestellt ist, befindet, und einer zweiten Position der Probe des Standards des radioaktiven Elements, wobei sich die Probe des Standards des radioaktiven Elements innerhalb des Kernreaktors, der auf die vorgegebene Stärke eingestellt ist, befindet,
   - einen Schritt der Berechnung (E7) der Gammaintensität des radioaktiven Elements mittels der Gleichung:

$$I(Ech_1) = \left( \frac{S(Ech_1)}{S(Ech_2)} \frac{R_2}{R_1} \frac{C_{d2}}{C_{d1}} \frac{\Delta\rho_2}{\Delta\rho_1} \frac{W_{A,1}}{W_{A,2}} \right) I(Ech_2)$$

   wobei
   $R_1$, beziehungsweise $R_2$ das Ergebnis der Gesamtabsorption des Detektors der ersten Messkette bei der Energie der Probe des radioaktiven Elements, beziehungsweise das Ergebnis der Gesamtabsorption des Detektors der zweiten Messkette bei der Energie der Probe des Standards des radioaktiven Elements sind, $W_{A,1}$, beziehungsweise $W_{A,2}$ der Neutronenwert des radioaktiven Elements, beziehungsweise der Neutronenwert des Standards des radioaktiven Elements sind,
   $C_{d1}$, beziehungsweise $C_{d2}$ ein Korrekturwert des radioaktiven Zerfalls der Probe des radioaktiven Elements, beziehungsweise ein Korrekturwert des radioaktiven Zerfalls des Standards der Probe des radioaktiven Elements sind, und
   $I(Ech_2)$ die Intensität der Gammastrahlung des Standards des radioaktiven Elements ist.

2. Verfahren gemäß Anspruch 1, wobei der Schritt der Messung (E8) einer ersten Änderung der Reaktivität $\Delta\rho_1$ des Kernreaktors mittels mindestens einer Messung der Änderung der Position eines Steuer-/Regelstabs (BP) des Kernreaktors zwischen:

   a) einer ersten Position des Steuer-/Regelstabs, für welche die Probe des radioaktiven Elements außerhalb des Kernreaktors platziert wird und der Kernreaktor auf eine vorgegebene Stärke eingestellt wird, und
   b) einer zweiten Position des Steuer-/Regelstabs, für welche die Probe des radioaktiven Elements innerhalb des Kernreaktors platziert wird und der Kernreaktor aufgrund der zweiten Position des Steuer-/Regelstabs auf die vorgegebene Stärke eingestellt wird, durchgeführt wird und

   der Schritt der Messung einer zweiten Änderung der Reaktivität $\Delta\rho_2$ des Kernreaktors mittels mindestens einer Messung der Änderung der Position des Steuer-/Regelstabs des Kernreaktors zwischen:

   a) einer ersten Position des Steuer-/Regelstabs, für welche die Probe des Standards des radioaktiven Elements außerhalb des Kernreaktors platziert wird und der Kernreaktor auf eine vorgegebene Stärke eingestellt wird, und
   b) einer zweiten Position des Steuer-/Regelstabs, für welche die Probe des Standards des radioaktiven Elements innerhalb des Kernreaktors platziert wird und der Kernreaktor aufgrund der zweiten Position des Steuer-/Regelstabs auf die vorgegebene Stärke eingestellt wird,

durchgeführt wird.

3. Verfahren gemäß Anspruch 1 oder 2, weiterhin umfassend mindestens einen Schritt der Messung einer Änderung der Reaktivität $\Delta\rho_e$ des Kernreaktors mittels des Oszillationsverfahrens zwischen einer ersten Position einer leeren Probe, wobei sich die leere Probe außerhalb des Kernreaktors, der auf eine vorgegebene Stärke eingestellt ist, befindet, und einer zweiten Position der leeren Probe, wobei sich die leere Probe innerhalb des Kernreaktors, der auf die vorgegebene Stärke eingestellt ist, befindet, wobei die Messung der Reaktivität $\Delta\rho_e$ von den Messungen der Reaktivitäten $\Delta\rho_1$, beziehungsweise $\Delta\rho_2$ abgezogen wird, so dass eine korrigierte Gammaintensität $I(Ech_1)_c$ des radioaktiven Elements mittels der Gleichung:

$$I(Ech_1)_c = \left( \frac{S(Ech_1)}{S(Ech_2)} \frac{R_2}{R_1} \frac{C_{d2}}{C_{d1}} \frac{\Delta\rho_2 - \Delta\rho_e}{\Delta\rho_1 - \Delta\rho_e} \frac{W_{A,1}}{W_{A,2}} \right) I(Ech_2)$$

angegeben wird.

4. Verfahren gemäß einem der Ansprüche 1 bis 3, wobei die Ergebnisse der Gesarntabsarption R1 und R2 vorab anhang von radioaktiven Referenzquellen gemessen werden.

5. Verfahren gemäß einem der vorhergehenden Anspräche, wobei die zweite Messkette und die erste Messkette ein und dieselbe Messkette sind und wobei der Schritt der Bestimmung des Werts der Nettofläche $S(Ech_1)$ gleichzeitig mit dem Schritt der Bestimmung des Werts der Nettofläche $S(Ech_2)$ durchgeführt wird.

FIG. 1

Ech$_X$

E9

E10

E11

E12

SP$_X$

# FIG. 2

# FIG. 3

# FIG. 4

FIG. 5A

FIG. 5B

## RÉFÉRENCES CITÉES DANS LA DESCRIPTION

**Documents brevets cités dans la description**

- FR 1506677 A
- FR 2149922 A5